Europäisches Patentamt

European Patent Office

Office européen des brevets

(19)

(11) **EP 0 793 207 A2**

(12) **EUROPÄISCHE PATENTANMELDUNG**

(43) Veröffentlichungstag:
03.09.1997 Patentblatt 1997/36

(51) Int. Cl.⁶: **G08B 19/02**

(21) Anmeldenummer: 97100585.5

(22) Anmeldetag: 16.01.1997

(84) Benannte Vertragsstaaten:
DE FR GB IT

(30) Priorität: 02.03.1996 DE 19608064

(71) Anmelder: DAIMLER-
BENZ AKTIENGESELLSCHAFT
70567 Stuttgart (DE)

(72) Erfinder:
• Trost, Diane, Dr.
72661 Grafenburg (DE)
• Trost, Jürgen, Dr.
72661 Grafenburg (DE)
• Raab, Markus
74912 Kirchardt (DE)

(54) **Verfahren zur Ermittlung der Bodenhaftung von Laufrädern bei Kraftfahrzeugen**

(57) Es wird ein Verfahren zur Ermittlung der Bodenhaftung von Laufrädern bei Kraftfahrzeugen bei nicht trockener Fahrbahnoberfläche beschrieben, bei welchem Verfahren eine auf wenigstens ein Rad wirkende Kraft permanent gemessen wird und bei welchem aus dieser gemessenen Kraft ein die Bodenhaftung beschreibendes Signal erzeugt wird.

Um die Möglichkeit zu schaffen, einen Verlust der Bodenhaftung infolge eines Aufschwimmens eines Laufrades auf einfache Art und Weise zuverlässig verhindern zu können, wird vorgeschlagen, als Kraftmeßgröße eine bei nicht trockener Fahrbahn auf das Rad in Fahrzeuglängsrichtung wirkende Schwallkraft zu verwenden und aus dieser Schwallkraft und der momentanen Fahrzeuggeschwindigkeit ein Signal zu erzeugen, welches derjenigen Geschwindigkeit entspricht, bei welcher das Fahrzeug bei der momentan vorliegenden Wasserfilmdicke aufschwimmen wird (Aufschwimmgeschwindikeit).

Fig. 1

Printed by Rank Xerox (UK) Business Services
2.14.12/3.4

EP 0 793 207 A2

**Beschreibung**

Die Erfindung betrifft Verfahren zur Ermittlung der Bodenhaftung von Laufrädern bei Kraftfahrzeugen gemäß dem Oberbegriff des Patentanspruches 1.

Aus der DE-OS 34 09 040 ist ein Verfahren bekannt, bei welchem die auf ein unter Schräglauf abrollendes Rad wirkenden Schräglaufkräfte als Maß für die momentane Bodenhaftung eines Laufrades verwendet werden. Diese Kräfte werden z.B. an den unter Vorspur laufenden Rädern gemessen. Da die Vorspur einer Achse bei einem Fahrzeug aber relativ gering ist, sind genaue Messungen der Schräglaufkräfte nur schwer möglich. Dies gilt insbesondere bei relativ geringen Schräglaufkräften, welche dann kaum noch meßbar sind. Je geringer jedoch die Schräglaufkräfte sind, desto näher befindet man sich aber auch an der kritischen Bodenhaftung. Dies bedeutet, daß der Zeitpunkt, ab welchem ein Fahrzeug seine Bodenhaftung aufgrund eines Aufschwimmens auf einem Wasserfilm (Aquaplaning) verliert, nicht genau ermittelt werden kann. Die wiederum heißt im ungünstigen Fall jedoch, daß das Fahrzeug seine Bodenhaftung bereits verloren hat, noch bevor dies dem Fahrer signalisiert wird. Eine weitere Ausführungsform der DE-OS 34 09 040 sieht vor, bei Bedarf ein zusätzliches Meßrad auszufahren, welches dann unter einem größeren Schräglaufwinkel abrollend auch größere Schräglaufkräfte rückmeldet. Ein ein- und ausfahrbares Zusatzrad erfordert jedoch einen erhöhten Bauaufwand. Ferner muß bei Nässe dieses Rad permanent ausgefahren sein, will man ununterbrochen einen Hinweis auf die aktuelle Bodenhaftung erhalten. Ein unter einem relativ großen Schräglaufwinkel permanent mitrollendes Zusatzrad erhöht jedoch die Fahrwiderstände und damit den Kraftstoffverbrauch des Fahrzeuges in beträchtlichem Maße.

Der Erfindung liegt die Aufgabe zugrunde, ein Verfahren der im Oberbegriff des Patentanspruches beschriebenen Art zu schaffen, welches es ermöglicht, daß ein Verlust der Bodenhaftung infolge eines Aufschwimmens eines Laufrades auf einfache Art und Weise verhindert werden kann.

Die Aufgabe wird erfindungsgemäß durch die Merkmale des Patentanspruches 1 gelöst.

Die bei Nässe an einem Laufrad eines Fahrzeuges angreifende Schwallkraft wirkt in Richtung der Fahrzeuglängsachse und steigt mit wachsender Fahrzeuggeschwindigkeit. Ebenso ist diese Schwallkraft um so größer, je größer die Wasserfilmdicke auf der Fahrbahn ist. Aus dieser auf ein Rad wirkenden Schwallkraft und der momentanen Fahrzeuggeschwindigkeit wird erfindungsgemäß ein Signal erzeugt, welches derjenigen Fahrgeschwindigkeit entspricht, bei welcher das Fahrzeug bei der momentan vorliegenden Wasserfilmdicke auf dem Wasserfilm aufschwimmen wird. Dem Fahrer kann also schon geraume Zeit vorher zuverlässig angezeigt werden, ab welcher Fahrzeuggeschwindigkeit er mit dem Eintreten von Aquaplaning zu rechnen hat. Er kann die Fahrgeschwindigkeit demnach schon deutlich vor Eintritt dieses kritischen Zeitpunktes, ab welchem das Fahrzeug seine Bodenhaftung verlieren wird, reduzieren. Auch ist es in weiterer Ausgestaltung der Erfindung denkbar, das erfindungsgemäß erzeugte Signal nicht ausschließlich nur zur Information des Fahrers zur verwenden, sondern dieses auch als Steuersignal für die Antriebseinheit des Fahrzeuges zu verwenden -z.B. für das Lastregelungsstellglied einer Brennkraftmaschine-, so daß die Geschwindigkeit bei Bedarf ohne Zutun des Fahrers automatisch reduziert wird, um ein Aufschwimmen eines Laufrades sicher zu vermeiden. Dadurch, daß die Schwallkräfte in Fahrzeuglängsrichtung wirken, ist kein zusätzliches unter einem Schräglaufwinkel abrollendes Zusatzrad erforderlich.

Vorteilhafte Weiterbildungen des erfindungsgemäßen Verfahrens sowie eine Vorrichtung zur Durchführung desselben sind in den Unteransprüchen angegeben.

Im folgenden ist die Erfindung anhand eines Ausführungsbeispieles näher erläutert.

Im einzelnen zeigt

Fig. 1        in einem Diagramm $\mu = f(v)$ den Zusammenhang zwischen dem Reibwert $\mu$ zwischen Rad und Fahrbahn und der Fahrzeuggeschwindigkeit v bei unterschiedlichen Wasserfilmdicken d,

Fig. 2        ein Ausführungsbeispiel einer Vorrichtung zur Durchführung des erfindungsgemäßen Verfahrens in Form einer Prinzipdarstellung und

Fig. 3        eine Seitenansicht der Rades 5 der Figur 2

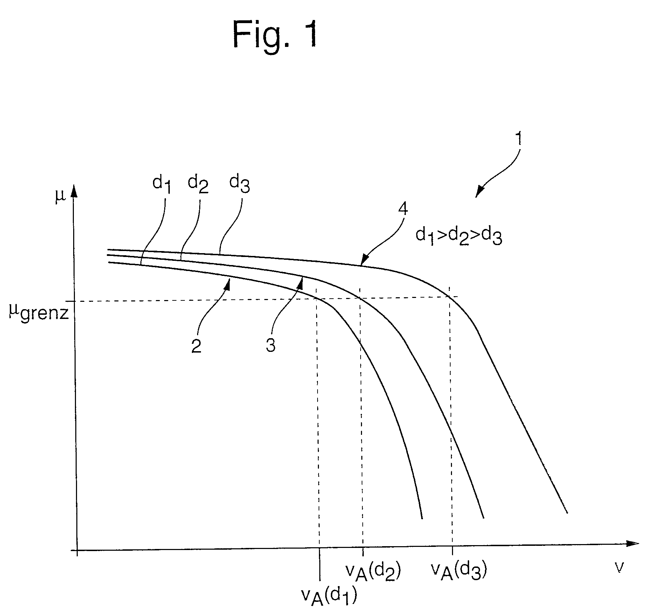

Figur 1 zeigt in einem Diagramm 1 den funktionalen Zusammenhang zwischen dem Reibwert $\mu$ zwischen Laufrad eines Kraftfahrzeuges und einer nicht trockenen Fahrbahn und der Fahrzeuggeschwindigkeit v bei unterschiedlichen Wasserfilmdicken d. In dem Diagramm 1 sind der Übersichtlichkeit wegen nur drei Kurven 2, 3 und 4 aufgezeigt, wobei 4 eine Kurve mit einer relativ geringen Wasserfilmdicke $d_3$, 3 eine Kurve mit einer mittleren Wasserfilmdicke $d_2$ und 2 eine Kurve mit einer relativ großen Wasserfilmdicke $d_1$ darstellt. Bei allen drei Kurven ist zu sehen, daß diese im Bereich geringer Fahrzeuggeschwindigkeiten relativ flach verlaufen, d.h. also, eine Erhöhung der Fahrzeuggeschwindigkeit v bewirkt nur eine relativ geringe Reduzierung des Reibwertes $\mu$ zwischen Reifen und Fahrbahn. Oberhalb einer bestimmten Grenzgeschwindigkeit $v(d_1)$ bzw. $v(d_2)$ bzw. $v(d_3)$ fallen die Kurven 2, 3 und 4 sehr steil ab, d.h. der Reibwert $\mu$ zwischen Reifen und Fahrbahn sinkt bei schon geringen Geschwindigkeitserhöhungen sehr stark ab. Dieser bei steigender Geschwindigkeit v steil abfallende Kurvenabschnitt zeigt somit den Geschwindigkeitsbereich auf, in welchem das Rad 5 bzw. der Reifen nicht mehr unmittelbar auf der Fahrbahn abrollt, sondern auf dem Wasserfilm gleitet. An den Stellen, an denen die Kurven 2, 3 und 4 von dem flachen Abschnitt in den steil abfallenden Abschnitt übergehen, also bei einem Grenzreibwert von $\mu_{grenz}$, beginnt das Aufschwimmen eines Rades 5. Mit anderen Worten heißt dies, ab derjenigen Geschwindigkeit v, bei welcher die jeweiligen Kurven von ihrem flachen Abschnitt in ihren steilen Abschnitt übergehen, schwimmt das Rad auf dem Wasserfilm auf. Dieser Übergangsbereich bzw. -punkt $\mu_{grenz}$ wandert mit kleiner werdenden Wasserfilmdicken d in Richtung höherer Geschwindigkeiten, also bei $d_1>d_2>d_3$ ist die Grenzgeschwindigkeit, ab welcher ein Rad aufschwimmt -im folgenden Aufschwimmgeschwindigkeit $v_A$ genannt-, bei der Kurve 4 mit der kleinsten Wasserfilmdicke $d_3$ am größten und bei der Kurve 2 mit der größten Wasserfilmdicke $d_1$ am kleinsten ($v_A(d_1)<v_A(d_2)<v_A(d_3)$).

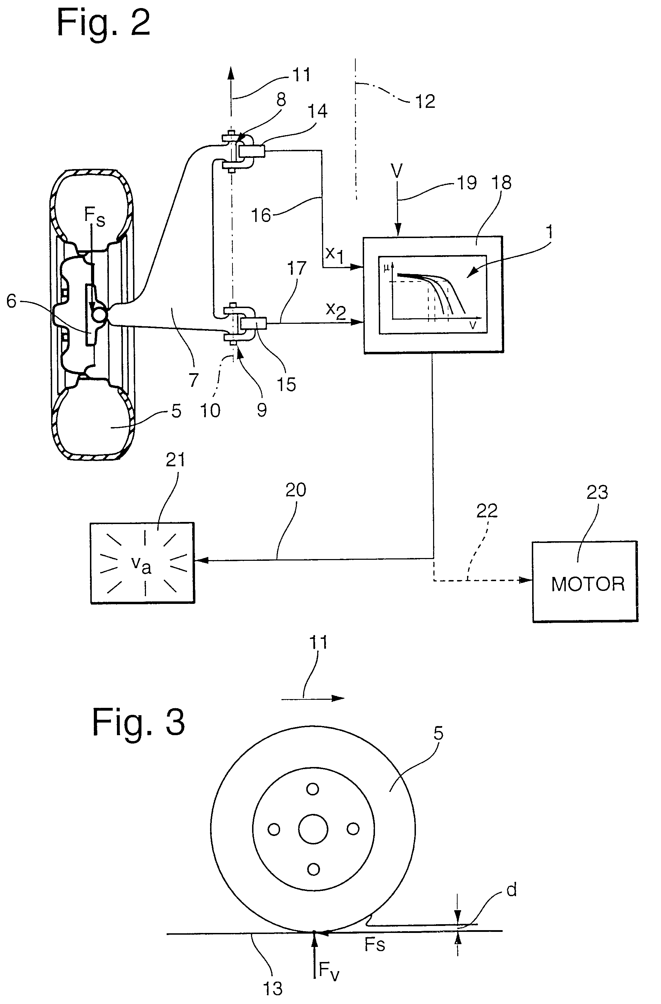

Figur 2 zeigt in einer Draufsicht ein Vorderrad 5 eines Kraftfahrzeuges, welches auf einem Radträger 6 drehbar gelagert und über einen Querlenker 7 mittels zweier elastischer Lager 8 und 9 am in der Zeichnung nicht dargestellten Fahrzeugaufbau angelenkt ist. Das Rad 5 ist dabei während des Federvorganges um die durch die beiden Lager 8, 9 vorgegebene Drehachse 10 schwenkbar. Rollt dieses Rad 5 auf einer nassen Fahrbahn in Richtung des Pfeiles 11 ab, so wirkt auf dieses eine parallel zur Fahrzeuglängsachse 12 gerichtete Kraft, die sogenannte Schwallkraft $F_S$, welche um so größer ist je größer die Fahrzeuggeschwindigkeit v und je größer die Wasserfilmdicke d ist. Mit dem Auftreten der Schwallkraft $F_S$ am Rad 5 tritt gleichzeitig auch eine auf das Rad 5 in Richtung senkrecht zur Fahrbahnoberfläche 13 wirkende Vertikalkraftkomponente $F_V$ auf, die das Rad 5 von der Fahrbahn 13 abzuheben versucht (s. Figur 3). Je größer diese Vertikalkraftkomponente $F_V$ ist, desto geringer ist die Bodenhaftung und damit der Reibwert $\mu$. Die Schwallkraft $F_S$ korreliert mit dieser Vertikalkraftkomponente $F_V$, d.h. je größer die Schwallkraft $F_S$ ist, desto größer ist auch diese Vertikalkraftkomponente $F_V$.

Die in Längsrichtung wirkende Schwallkraft $F_S$ verursacht über den Querlenker 7 eine Verformung in den beiden elastischen Lagern 8 und 9. Diese Verformungen werden über je einen an je einem Lager 8 bzw. 9 angeordneten Wegsensor 14 bzw. 15 erfaßt und über die Meßwertleitungen 16 und 17 als entsprechende elektrische Signale (Wege $x_1$ und $x_2$) an eine elektronische Steuereinheit 18 übermittelt. Der elektronischen Steuereinheit 18 wird darüber hinaus ein der aktuellen Fahrzeuggeschwindigkeit v entsprechendes Signal zugeführt (Pfeil 19). Anhand der momentanen Schwallkraft $F_S$ und der momentanen Fahrzeuggeschwindigkeit v wird nun die momentan vorliegende Wasserfilmdicke d (s. auch Figur 3) ermittelt. Entsprechend dieser momentan vorliegenden Wasserfilmdicke d wird aus der entsprechenden Kurve aus dem Diagramm 1 $\mu=f(v)$ (s. Figur 1 und 2) die Aufschwimmgeschwindigkeit $v_A$ ausgelesen und dem Fahrer über die Steuerleitung 20 und ein Display 21 im Fahrzeuginnern angezeigt. Die funktionalen Zusammenhänge zwischen Schwallkraft $F_S$, Fahrzeuggeschwindigkeit v und Wasserfilmdicke d sowie die funktionalen Zusammenhänge zwischen dem Reibwert $\mu$ und der Fahrzeuggeschwindigkeit v (Figur 1) sind als experimentell ermittelte Kennfelder in Festwertspeichern der elektronischen Steuereinheit 18 abgelegt.

Mit dem erfindungsgemäßen Verfahren erhält der Fahrer somit schon in einem Geschwindigkeitsbereich, der weit unter der Aufschwimmgeschwindigkeit $v_A$ liegt, die Information, ab welcher Geschwindigkeit er mit dem Verlust der Bodenhaftung durch Aquaplaning rechnen muß. Ein Verlust der Bodenhaftung durch Aquaplaning kann somit durch Einleitung entsprechender Maßnahmen durch den Fahrer sicher verhindert werden.

In weiterer Ausgestaltung der Erfindung kann das von der elektronischen Steuereinheit 18 erzeugte Signal (gestrichelt angedeutete Steuerleitung 22 auch zur Steuerung der Antriebseinheit 23 (z.B. Brennkraftmaschine) des Fahrzeuges dienen, z.B. dergestalt, daß das Lastregelstellglied dieser Antriebseinheit 23 bei Erreichen einer vorgegebenen Geschwindigkeit $v_2=v_A-\Delta v$ unterhalb der Aufschwimmgeschwindigkeit $v_A$ entsprechend in Richtung Leistungsreduzierung angesteuert wird.

Zur Ermittlung der Schwallkraft $F_S$ können anstelle der beiden Wegsensoren 14 und 15 auch zwei die Beschleunigungen des Radträgers 6 erfassende Sensoren eingesetzt werden, wobei der eine Sensor die Beschleunigung in Fahrzeuglängsrichtung und der andere Sensor die Beschleunigung des Radträgers in Richtung der Fahrzeughochachse erfaßt.

Selbstverständlich muß die Schwallkraft nicht nur an einem Rad ermittelt werden, es ist ebenso denkbar, die Schwallkraft an mehreren Rädern (z.B. beide Vorderräder) zu messen und durch eine Minimalauswahl, die geringste Aufschwimmgeschwindigkeit $v_A$ auszugeben, d.h. die Aufschwimmgeschwindigkeit $v_A$ desjenigen Rades als Steuergröße zu verwenden, welches als erstes die Bodenhaftung zu verlieren droht.

**Patentansprüche**

1. Verfahren zur Ermittlung der Bodenhaftung von Laufrädern bei Kraftfahrzeugen bei nicht trockener Fahrbahnoberfläche, bei welchem Verfahren eine auf wenigstens ein Rad wirkende Kraft permanent gemessen wird und bei welchem aus dieser gemessenen Kraft ein die Bodenhaftung beschreibendes Signal erzeugt wird,
**dadurch gekennzeichnet,**
daß die Kraftmeßgröße eine bei nicht trockener Fahrbahn (13) auf ein Rad (5) in Fahrzeuglängsrichtung (11) wirkende Schwallkraft ($F_S$) ist und daß aus dieser Schwallkraft ($F_S$) und der momentanen Fahrzeuggeschwindigkeit (v) ein Signal erzeugt wird, welches derjenigen Geschwindigkeit entspricht, bei welcher das Fahrzeug bei der momentan vorliegenden Wasserfilmdicke (d) aufschwimmen wird (Aufschwimmgeschwindigkeit

$v_A$ ).

2. Verfahren nach Anspruch 1,
   **dadurch gekennzeichnet,**
   daß dem Fahrer die ermittelte Aufschwimmgeschwindigkeit ($v_A$) angezeigt wird.

3. Verfahren nach einem der Ansprüche 1 bis 2,
   **dadurch gekennzeichnet,**
   daß die Aufschwimmgeschwindigkeit ($v_A$) aus einem fahrzeuggeschwindigkeits- und schwallkraftabhängigen, experimentell ermittelten Kennfeld ausgelesen wird.

4. Verfahren nach einem der Ansprüche 1 bis 3,
   **dadurch gekennzeichnet,**
   daß die momentane Schwallkraft ($F_S$) ermittelt wird aus im Fahrwerk auftretenden, über wenigstens einen Sensor (14,15) erfaßte Verformungen.

5. Vorrichtung zur Durchführung des Verfahrens gemäß einem der Ansprüche 1 bis 4,
   **gekennzeichnet durch**
   eine elektronische Steuereinheit (18), welcher ein der aktuellen Fahrzeuggeschwindigkeit (v) entsprechendes Meßwertsignal und wenigstens ein weiteres Meßwertsignal ($x_1,x_2$) zugeführt wird, welches weitere Meßwertsignal ($x_1,x_2$) von einem im Bereich der Anbindung der Radführungselemente (7) am Fahrzeugaufbau angeordneten, die Änderung der Relativlage von Radführungselement (7) zu Fahrzeugaufbau erfassenden Wegsensor (14,15) erzeugt wird und welche elektronische Steuereinheit (18) ein der aktuellen Aufschwimmgeschwindigkeit ($v_A$) entsprechendes Signal an eine im Fahrzeuginnenraum angeordnete, für den Fahrer sichtbare Anzeigevorrichtung (21) übermittelt.

# Fig. 1

# Fig. 2

# Fig. 3